# EUROPEAN PATENT APPLICATION

(11) **EP 0 696 430 A1**
(43) Date of publication of application: **14.02.1996**
(21) Application number: 95500120.1
(22) Date of filing: 10.08.1995
(51) Int. Cl.: A47J 37/06, A47J 37/00

(54) **Multi-function electric home appliance**

(30) Priority: 12.08.1994 ES 9401815
(71) Applicant: ELECTRODOMESTICOS SOLAC, S.A., E-01195 Vitoria (Alava) (ES)
(72) Inventor: Labadia del Fresno, Miguel, E-01195 Vitoria (Alava) (ES)
(74) Representative: Carpintero Lopez, Francisco

(57) **Abstract**

Is made up of a base body (1) to which a cover (4) is joined through a hinge, being body and cover fitted with functionally independent electric heating elements (10) and (11), being the first ones directly fixed to the internal surface of the metal plate (5) of said cover, whereas the second ones are fitted upon an auxiliary support (12), retractable against springs (13) and which allow the use of different cooking trays (3), with different depths, interchangeable, and which maintain in any case a maximum proximity situation in respect to the heat emitting focus defined by said heating elements (11). With this set of trays cooperate a couple of handles that act simultaneously as fixing means to fix the tray (3) to the base body (1) and as supporting legs for said tray whenever it is used outside the electric home appliance, whereas said base body (1) and cover (4) are hinged together through pins (6) that play inside slit holes (7) and which allow the cover to adopt three different stable positions.

## Description

### OBJECT OF THE INVENTION

This invention refers to a small electric home appliance, centering its characteristics in multi-function performance, so that it may ba called a "cooking mini-centre", allowing the preparation of various food products such as sandwiches, steaks, eggs, fish, sausages, french fries, roast a chicken, etc. More specifically, the electric home appliance subject of this patent specification may be used as a sandwich maker, as a grill, as an oven, as a frying pan, as a casserole and even, as an additional function and by reserving the use of a part of the appliance, as a tray upon which the already cooked aliments may be served on the table, with the added feature that the food bearing surface of the tray helps to keep them warm.

### BACKGROUND OF THE INVENTION

Right now there is no electric home appliance capable of offering the previously mentioned multi-function features and, taken into consideration that said electric home appliance has been designed as an extension of conventional sandwich makers, the closest background is made up by the fore mentioned sandwich makers.

A sandwich maker basically consists of two metal plates each of which is fitted with heating elements and between which are placed the sandwich components, the covers protecting plates and electrical connections and a handle that permits using the appliance without risking body burns. The two plates are hinged to each other through an axis joining them along the longest end, axis that may be fixed to the plates themselves or to the covers supporting them. The heating plates are also fitted with a thermostat that limits their usage temperature, as well as a thermal fuse that trips the unit in case of a regulating system malfunction.

The sandwich makers currently available on the market produce a "sealed" sandwich, which is to say, a sandwich in which the edges of the two bread loaf slices are pressed against each other during the warming up process, so that the resulting sandwich is thicker in the middle and thinner at the edges, and the edges are furthermore sealed shut to prevent its contents falling off the sandwich. A negative effect of this "sealing" process consists in that the usable size of the sandwich is limited to the perimeter established by the sealing and the remaining bread is then left very dry and hard and, therefore, very much unusable. This characteristic may be compared to that of the sandwiches better known among the consumers as those made at "cafeterias" and which, because they are cooked "on the grill" are not sealed and conserve a very nice texture throughout their surface.

From the constructive point of view, all the sandwich makers, in comparison with the "grilling" plate appliances, have all of the heating elements fixed, that is to say, they may not be taken apart by the user for cleaning. The plates are normally covered by a non-stick substance to prevent the sandwich adhering to them and to make cleaning easier. The material employed to manufacture heating plates normally is injected aluminium, being the heating elements integrated into the plate. There are also sandwich makers with inlaid iron plates to lower their costs, but the technical solutions adopted are not good enough to enable their functional performance to be satisfactory due to heat transmission problems.

These structural characteristics limit the functionality of the sandwich makers to being used as simple sandwich making appliances, with very few exceptions in some cases allowing very limited complementary cooking operations such as, for instance, frying an egg.

### DESCRIPTION OF THE INVENTION

The electric home appliance described herein solves the fore mentioned problems by offering a wide range of functional possibilities that, as already mentioned, extend from their use as a conventional sandwich maker to their use as a casserole, and including that of a grill plate, oven, cooking pot and frying pan, as well as the already mentioned additional feature of using it as a tray on which to serve the already cooked foodstuffs.

To this end and more specifically, the electric home appliance under consideration is structured to, starting from a basic body and cover, fitted with their respective electric heating elements, being the resistance on the cover directly adapted to the internal surface of the corresponding plate, with an optimum heat transmission towards said plate, and whereas the heating element of the bottom part is fitted upon an auxiliary retractable support playing against springs working compressed, so that because of the "floating" character and mobility of said support upon the base body, trays of different depth and shape may be housed therein so that, by itself or in its combination with the cover, may transform or adapt the electric home appliance to the type of cooking or culinary treatment selected for the preparation of the product and its volume. Once located the tray upon the base body, the springs push the heating element support against the base of the tray being used, with the purpose of obtaining an optimum use of the heat energy generated by the heating element.

There obviously exists the possibility of using, in exchange for the springs acting against the auxiliary support of the resistance of the base body, positioning levers for the fore mentioned support (non described nor represented herein) that allow placing said support at previously set heights or positions. This solution has the disadvantage in respect of the springs that, prior to introducing the tray selected, it is necessary to move the heating element support manipulating the corresponding controls, in order to achieve the space necessary to house the desired tray, whereas when using the solution represented by the springs, the act of introducing the tray pushes back the electric heating element support.

The electric heating elements of the body and the cover may, as desired, be connected in series or parallel. If they are installed in series, both of them work simultaneously and may be controlled with the same thermostat although, optionally, an independent thermostat may also be used to control each heating element. If the electric heating elements are placed in parallel, they may then be arranged independently and, in that case, be controlled through different thermostats.

As previously mentioned, the electric home appliance described here is structured through the combination of a base body and a cover, being body and cover joined to each other by an articulation through a mechanism that allows said parts to adopt three stable positions, a closed position, in which the electric home appliance acts as an oven, sandwich maker, cooking recipient or cooking pot fitted with a cover; another capable of opening slightly more than 90°, in which only the body tray will be used, acting as a grill plate, frying pan, casserole, etc. and a 180° maximum opening position, in which both trays, body and cover, may be used simultaneously, in identical or different way, which is to say, the body tray may be used as a frying pan, for instance, whereas the cover tray may simultaneously be used a an electric plate or grill.

Besides the three fore mentioned positions, the hinge mechanism does also allow the cover to adopt positions that are parallel and superimposed to the body, but without actually getting to close upon it, that is to say, just as a grill plate, with the purpose of accommodating within it large size products.

To achieve the previously mentioned stable positions and, more specifically, to achieve the last two, that is to say, that on an angle close to 90° and the 180° extended position, the cover incorporates as a prolongation of its tilting edge two coaxial pins acting within vertically slit holes, operatively placed inside upper rear projections of the base body, with the essential particularity that said slit holes presented at their lower end a slight arching oriented inward, in which said pins are placed when the cover reaches the intermediate stable position, that is to say the position near the 90° angle, position that is stabilized by the support of said cover upon a broadside bar fixed to the base body, parallel to its rear edge and conveniently offset outward, bar that serves as a handle to transport and move around the electric home appliance when it is closed and not being used. The maximum tilt position, corresponding to the 180° angle, its achieved through the displacement of the pins toward the upper end of the slit holes, position in which the cover is directly and horizontally supported upon the fore mentioned rear broadside bar of the base body.

In accordance with another of the characteristics of the invention, the electric home appliance is fitted with a couple of handles, to be permanently fixed to any of the trays forming part thereof, being each handle fitted with a clasp, acted upon by a side push button and prepared to block the edge of the tray.

Provisions have also been made to enable said handles to be fixed to the body of the electric home application through the action of tilting nails specifically located in lower extensions of said handles so that, when the assembly made up of said handles and the tray is taken off the electric home appliance, they result in legs or supports that allow placing the tray upon a table or other surface, without the bottom of the tray making contact with the surface on which it has been placed, thus protecting the resting surface from the heat, all of the foregoing with an adequate degree of stability.

In a less expensive version of the electric home appliance the handles could be fixed, that it to say, each tray would be fitted with fixed handles. This version would furthermore cover the demand or a market sector requiring easier to handle and simpler products.

### DESCRIPTION OF THE DRAWINGS

In order to complement the description being made and with the purpose of aiding towards a better comprehension of the characteristics of the invention, this patent specification is accompanied by a set of drawings forming part thereof and on which, with a exclusively illustrative and not limitative character, the following has been represented:

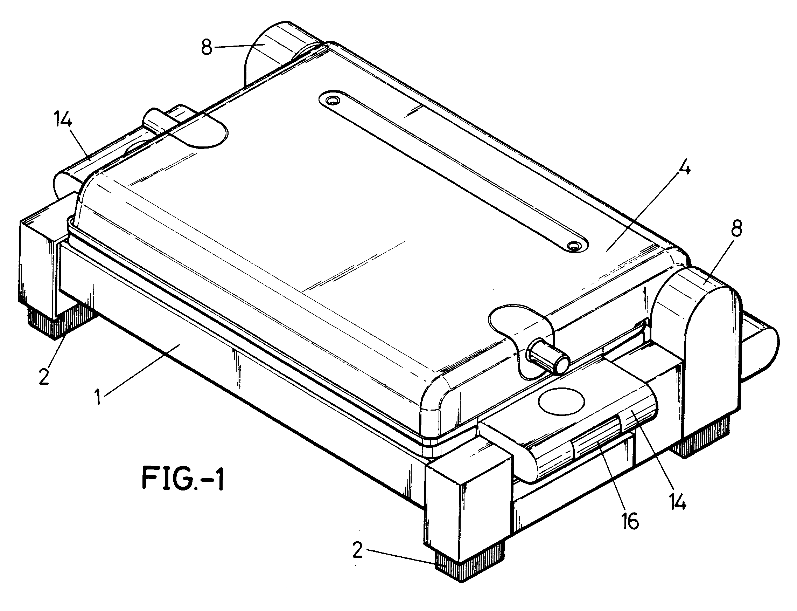

Figure 1.- Shows a forward upper side perspective view of a multi-function electric home appliance built in accordance with the object of this invention, shown in its closed position.

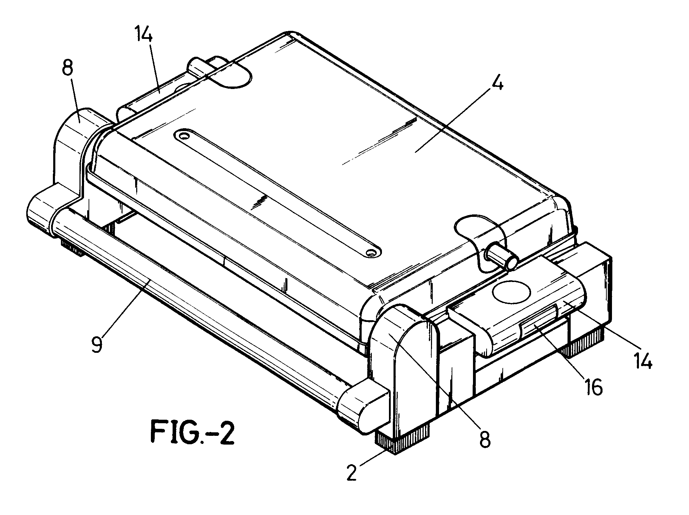

Figure 2.- Shows another perspective view of the same electric home appliance, in this case from the rear upper side.

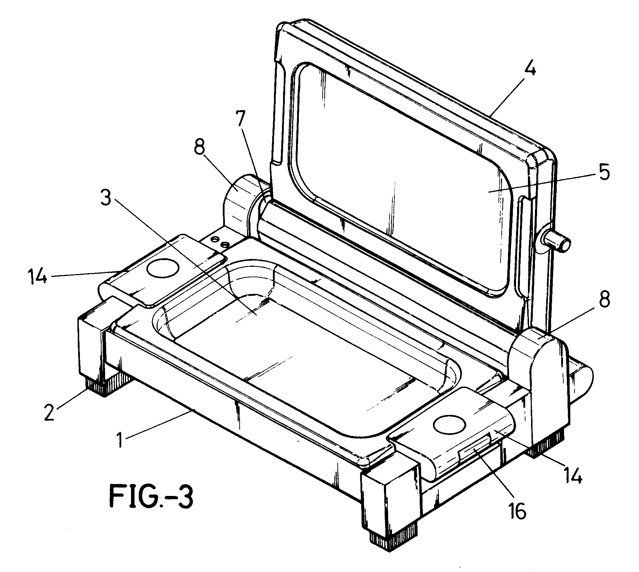

Figure 3.- Shows a perspective view similar to that of figure 1, but in which the electric home appliance is shown in the intermediate opening position.

Figure 4.- Shows the assembly shown in figure 3, taken apart and also on a perspective view.

Figure 5.- Shows a cross section view of the electric home appliance, in the closed situation, incorporating an intermediate depth tray.

Figure 6.- Shows another cross section of the same electric home appliance, with the same tray, in an intermediate cover opening situation.

Figure 7.- Shows another section similar to that of figures 5 and 6 but corresponding to the total cover opening position.

Figure 8.- Shows a cross section view of the electric home appliance, with its cover in the intermediate opening position and incorporating the minimum depth tray fitted in its body section.

Figure 9.- Shows another cross section view, now in the fully closed position, with the minimum depth tray fitted in its body section.

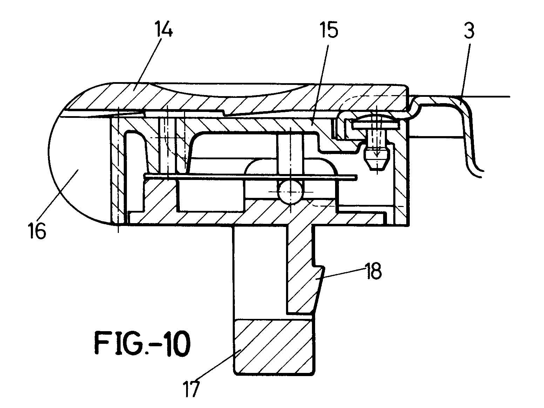

Figure 10.- Shows, finally, an expanded cross section view detail of one of the handles that may be fitted upon the base body to fix any of the trays forming part of the electric home appliance..

### PREFERRED EXECUTION OF THE INVENTION

Upon looking at the above figures it may be observed that the multi-function electric home appliance described herein is structured starting off a base body (1), of mainly rectangular construction, fitted with supporting legs (2) that distance it conveniently from the surface upon which it is used, such as, for instance, a kitchen top, a base body (1) inside which may be fitted a tray (3), forming part of a set of several trays coinciding in respect of the periphery fitting entrance section but featuring different depth and shape, with or without internal tray bottom reliefs provided to shape products, to fit different functions of the electric home appliance and/or different types of food to cook.

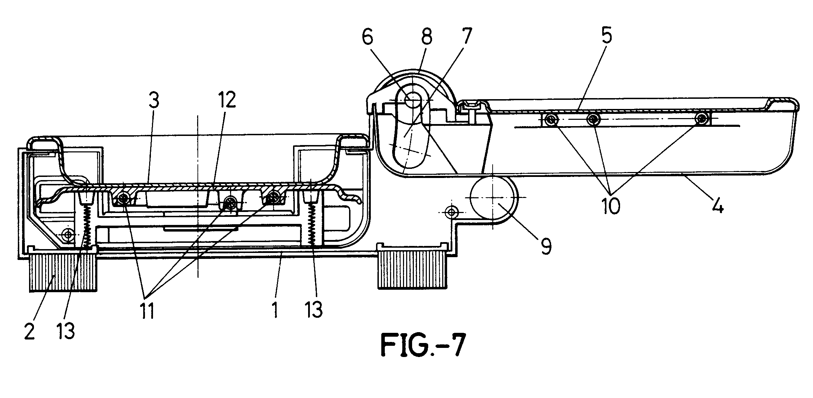

The base body (1) is complemented by a cover (4) fitted with a metal plate (5) equivalent to the previously mentioned trays (3), to which end it is mainly affected by a shallow shape, as may be observed, for example, in figure 7.

From the point of view of warming the trays, the electric heat producing element (11) of the base body is joined to a "floating" auxiliary support (12), made of a material with a good heat transmission coefficient upon which auxiliary support (12) is supported the tray being used (3), whichever may the tray selected be from among the different depth tray set supplied with the electric home appliance, given that the auxiliary support (12) is retractable against the action of springs (13) which, working in compression, tend to project the fore mentioned support (12) outside the body (1) and, therefore, against the bottom of the tray (3) housed inside it, maintaining a position of maximum depth of the heating element (11) in respect to the bottom of the tray (3).

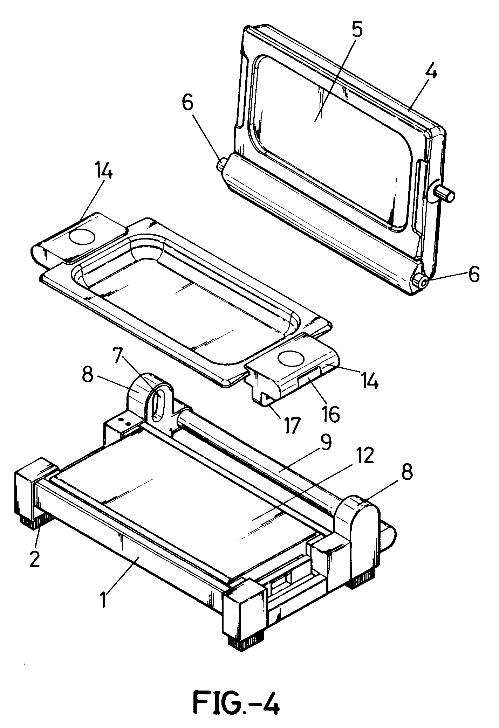

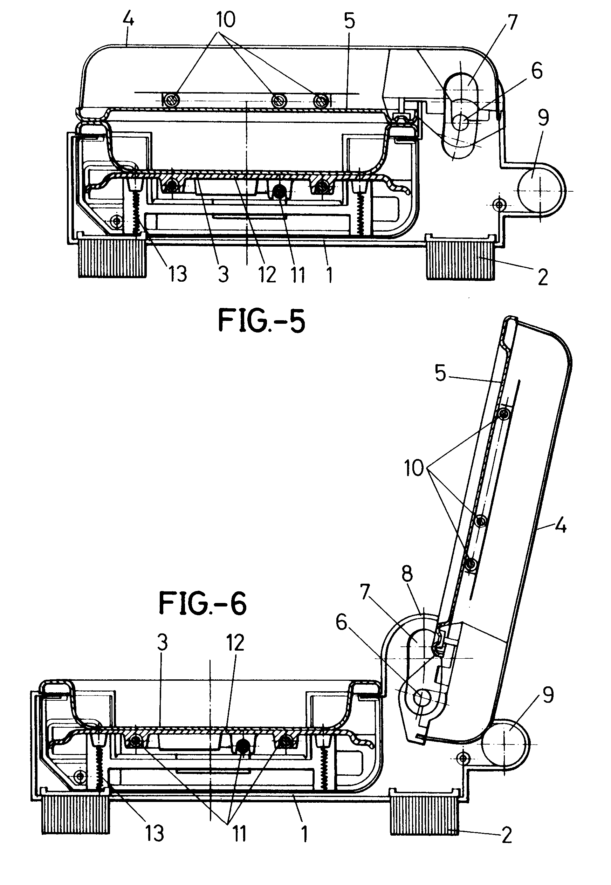

On the other side, the cover (4) may adopt, in respect to the base body (1), three stable positions, those represented in figures 5, 6 and 7, to which effect the cover (4) is fitted at its tilting edge with coaxial end pins (6) playing upon vertically slit holes (7) made in upper projections (8) of the base body (1), with the special particularity that said slit holes (7), as may be observed in any of the fore mentioned figures 5 to 7, present in their lower end a slight forward oriented arched curvature upon which the fore mentioned pins (6) rest in the intermediate opening position represented in figure 6, position that is stable as the external surface of the cover (4) rests or is supported upon a broadside bar (9) conveniently fixed in respect to it, as may be observe specially in figure 4, bar that does furthermore constitute a transport handle designed to make the electric home appliance assembly easier to carry.

This slit configuration of the hole (7) allows the pins (6) to adopt within it two positions, the lower end position shown in figure 6 and corresponding to the intermediate opening of the cover, and an upper end position, shown in figure 7, in which the cover (4) adopts a horizontal arrangement also supported upon the fore mentioned broadside bar.

This possibility may be practiced as the fore mentioned auxiliary support (12) rests upon the bottom of the base body (1) and, through springs (13) working in compression and which, as a consequence, tend at all times to project the support (12) against the bottom of the tray (3) and thus maintain a situation of maximum proximity in respect to the heating elements (11).

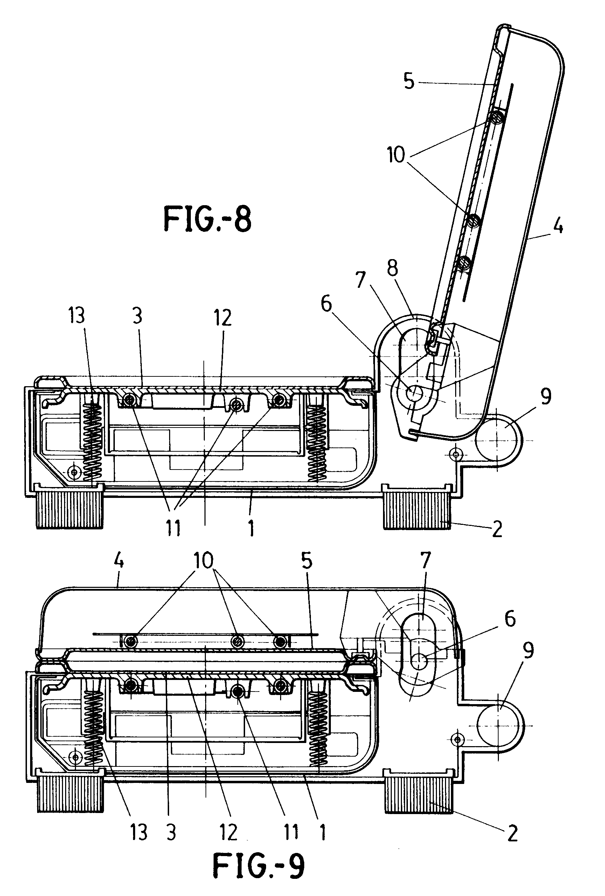

Whichever tray (3) may be selected as functional element integrated at all times to the electric home appliance, said tray is kept conveniently fixed to the base body (1) with the cooperation of a couple of side handles (14), each one of which is fitted with a push button (16) operated clasp (15) designed to fix the edge or entrance of the tray (3), as may be observed specially in figure 8, at the same time that the handle (14) itself has a lower projection (17) fitted in its internal side with a tilting nail (18) that allows it to be fixed to the base body (1), by housing itself into a rib conveniently practiced therein, having furthermore the fore mentioned lower extension (17) a longer depth than any of the trays (3) supplied with the electric home appliance, so that in any case the set made up of the tray (3) and the couple of handles (14), may be taken off the base body (1) and thus constitute a serving tray that may be deposited upon a table or any other type of kitchen top, serving the extensions (17) as insulating legs or supports that conveniently distance the bottom of the tray (3) from the surface where the assembly is being set, thus avoiding a possible heat damage of the fore mentioned surface.

This removable feature of the trays (3) does not only allow to use in each case the most appropriate as part of the electric home appliance and use any of the trays to serve the food, but does also allow an easy cleaning of said trays off the electric home appliance and , consequently, they may be placed inside an electric dishwasher or may, in any case, be quickly, easily and efficiently cleaned.

Nevertheless, and as previously mentioned, the electric home appliance may be supplied with a fixed handle tray set which, whereas they do detract from some of its characteristic features, may also cover the needs demanded by a market sector requiring easier to handle products.

## Claims

**1.-** Multi-function electric home appliance which, being made up of a combination of base body (1) and a tilting cover (4), fitted with respective electric heating elements (10) and (11), of simultaneous or independent operation, characterized in that the electric heating element (11) of the base body (1) is fitted upon an auxiliary support (12) "floating" and retractable against the action of appropriate springs (13) adequately distributed and arranged between said support (12) and the bottom body (1), so that inside the fore mentioned body (1) may be housed a set of trays (3) of different depths, fitting the shape and size of the product to be cooked and the cooking option selected, options that are complemented with the cooperation of the cover (4) fitted with a fixed tray (5) and its corresponding heating element (10).

**2.-** Multi-function electric home appliance, according to the above claim, characterized in that with the set of trays (3) cooperate a couple of handles (14), each of which is fitted with a clasp (15) to be fixed to the edge of any of the trays (3), clasp operated by an external side push button device (16), at the same time that each one of said handles (14) is fitted with a lower extension (17) fitted with a tilting nail (18) through which the handle (14) and tray (3) assembly is fixed to the base body (1) with the cooperation of side ribs provided in said base body (1).

**3.-** Multi-function electric home appliance, according to the second claim, characterized in that the extensions (17) of the handles (14) have a length greater than the maximum depth of the trays (3) supplied with the electric home appliance, constituting stable support legs for any of the trays upon a flat surface, being the bottom of the trays substantially distanced from the fore mentioned supporting surface so that said surface is not affected by the heat liberated by the fore mentioned tray.

**4.-** Multi-function electric home appliance, according to the first claim, characterized in that the cover (4) may adopt three stable positions in respect to the body (1), a closing position, an intermediate opening position close to a 90° angle, and a maximum opening position, in which said cover (4) reaches a fully horizontal position, being provided that , to said effects, the cover (4) incorporates in correspondence with is tilting edge two end pins (6) that play upon vertical slit holes (7) practiced in upper projections (8) of the base body (1), whereas this later part is fitted with a rear broadside bar (9) substantially distanced from its rear wall, so that the cover (4), supported upon said broadside bar (9), places its pins (6) upon the bottom of the slit holes (7) in an intermediate opening positions, to which effect said holes present a slightly inward arched lower curvature, to stabilize said position, whereas in the maximum opening position said pins (6) are supported upon the upper end of the slit holes (7).
